# FASCICULE DE BREVET EUROPEEN

(11) **EP 3 251 904 B1**
(45) Date de publication et mention de la délivrance du brevet: **10.06.2020**
(21) Numéro de dépôt: 17169380.7
(22) Date de dépôt: 04.05.2017
(51) Int. Cl.: B60S 1/40

(54) **ADAPTATEUR DE RACCORDEMENT DE L'EXTRÉMITÉ LIBRE D'UN BRAS D'ESSUIE-GLACE, ENSEMBLE COMPORTANT UN TEL ADAPTATEUR ET UN BRAS D'ESSUIE-GLACE**
ANSCHLUSSADAPTER DES FREIEN ENDABSCHNITTS EINES SCHEIBENWISCHERARMS, UND ANORDNUNG, DIE EINEN SOLCHEN ADAPTER UND EINEN SCHEIBENWISCHERARM UMFASST
ADAPTER FOR ATTACHING THE FREE END OF A WINDSCREEN WIPER ARM, ASSEMBLY COMPRISING SUCH AN ADAPTER AND A WINDSCREEN WIPER ARM

(30) Priorité: 31.05.2016 FR 1654899
(43) Date de publication de la demande: 06.12.2017
(73) Titulaire: Valeo Systèmes d'Essuyage, 78322 Le Mesnil Saint Denis (FR)
(72) Inventeur: GAUCHER, Vincent, 63500 ISSOIRE (FR); HOUSSAT, Stéphane, 63500 ISSOIRE (FR); JOMARD, Olivier, 63500 ISSOIRE (FR)
(74) Mandataire: Valeo Systèmes d'Essuyage

(56) Documents cités:
- EP-A2- 1 184 239
- FR-A1- 2 902 394
- KR-A- 20090 030 949
- US-A- 5 632 059
- US-A1- 2003 066 153
- US-A1- 2007 017 054

## Description

### DOMAINE TECHNIQUE DE L'INVENTION

L'invention concerne un adaptateur, aussi appelé pièce de raccordement, utilisé pour raccorder l'extrémité libre d'un bras d'essuie-glace à un élément d'une structure de support d'une lame d'essuyage d'un balai d'essuie-glace.

L'invention concerne aussi un ensemble comportant un tel adaptateur et un bras d'essuie-glace.

### ARRIERE PLAN TECHNIQUE DE L'INVENTION

L'invention concerne plus particulièrement un adaptateur pour raccorder une extrémité en forme de crochet en U du bras d'essuie-glace à un axe d'articulation qui s'étend transversalement entre deux joues latérales parallèles de l'élément de support de la lame d'essuyage, cet élément de support étant par exemple réalisé sous la forme d'un étrier principal d'articulation.

Selon une conception connue d'un tel adaptateur de raccordement, il comporte deux ailes latérales parallèles et opposées dont les faces externes verticales sont prévues pour être reçues transversalement entre les faces internes verticales opposées en vis-à-vis de joues latérales parallèles de l'élément de support. Le crochet d'extrémité du bras d'essuie-glace est reçu entre les ailes latérales de l'adaptateur.

Dans une telle conception, les ailes latérales sont reliées entre elles par un corps transversal avant qui se prolonge longitudinalement vers l'arrière par deux branches opposées et qui délimite un logement de palier dans lequel peut être introduit l'axe d'articulation.

Le corps avant est délimité par une surface cylindrique externe convexe qui est reçue dans un fond concave complémentaire du crochet en U de l'extrémité du bras d'essuie-glace.

Un tel type d'adaptateur est satisfaisant et permet notamment de réaliser de manière simple le montage d'un balai d'essuie-glace sur l'extrémité libre en forme de crochet en U du bras d'essuie-glace.

De manière connue, la partie principale du corps du bras d'essuie-glace et sa portion d'extrémité en forme de crochet en U sont réalisées sous la forme d'une barre métallique pliée de section rectangulaire dont la largeur transversale correspond sensiblement à la distance séparant les faces internes opposées en vis-à-vis des ailes latérales de l'adaptateur.

Toutefois, une telle conception d'un adaptateur ne permet pas, à l'aide du même adaptateur, de monter un balai d'essuie-glace sur des bras d'essuie-glace de dimensions différentes et notamment lorsque la longueur du brin "court" de la portion d'extrémité en forme de crochet en U est différente d'un bras d'essuie-glace à l'autre.

Afin de s'adapter notamment à aux moins deux gammes de longueurs différentes du brin court de l'extrémité en forme de crochet d'un bras d'essuie-glace, le document FR-2.713.179 propose une conception d'un adaptateur pour le raccordement d'un balai d'essuie-glace à une extrémité en forme de crochet en U d'un bras d'essuie-glace, cet adaptateur comprenant deux ailes latérales verticales entre lesquelles est reçu le crochet d'extrémité du bras d'essuie-glace, un corps de profil externe avant convexe qui s'étend transversalement entre les faces internes des deux ailes, au moins une première protubérance de verrouillage longitudinal qui est portée par une aile latérale et qui fait saillie transversalement vers l'intérieur pour coopérer avec une face d'extrémité avant convexe d'un premier crochet d'extrémité d'une première longueur de son brin court, et au moins une deuxième protubérance qui est portée par l'aile latérale, qui est décalée longitudinalement par rapport à la première protubérance, et qui fait saillie transversalement vers l'intérieur pour coopérer avec une face d'extrémité avant convexe d'un deuxième crochet d'extrémité d'une deuxième longueur de son brin court qui est différente, par exemple inférieure, à la longueur du brin court du premier crochet.

Dans la conception proposée dans ce document, chaque protubérance est solidaire de l'aile latérale qui la porte. Lors du montage de l'un ou l'autre des deux types de crochet, la protubérance associée doit s'escamoter transversalement pour le passage de l'extrémité en forme de crochet et ceci est obtenu par une déformation élastique de l'aile latérale, notamment au risque de détériorer l'aile latérale et/ou la zone de raccordement entre l'aile latérale et le corps de l'adaptateur.

L'invention vise à remédier à cet inconvénient en proposant un adaptateur qui permet le montage d'un balai d'essuie-glace sur au moins deux bras d'essuie-glace dont la longueur du brin court de la portion d'extrémité libre en forme de crochet en U est différente. US-A-2003/0066153 montre le préambule de la revendication 1.

### BREF RESUME DE L'INVENTION

L'invention propose un adaptateur, pour le raccordement d'un balai d'essuie-glace à une extrémité avant en forme de crochet en U d'un bras d'essuie-glace, comprenant :
- deux ailes latérales verticales entre lesquelles est reçu le crochet d'extrémité du bras d'essuie-glace ;
- un corps de profil externe avant convexe qui s'étend transversalement entre les faces internes des deux ailes;
- au moins une première protubérance qui est portée par une aile latérale et qui fait saillie transversalement vers l'intérieur pour coopérer avec une face d'extrémité avant convexe d'un premier crochet d'extrémité d'une première dimension ;

- au moins une deuxième protubérance qui est portée par une aile latérale qui fait saillie transversalement vers l'intérieur pour coopérer avec une face d'extrémité avant convexe d'un deuxième crochet d'extrémité d'une deuxième dimension ; caractérisé en ce que chaque protubérance est montée mobile par rapport à l'aile latérale qui la porte entre :
   -- une position de repos dans laquelle elle fait saillie transversalement vers l'intérieur ;
   -- et une position escamotée transversalement vers l'extérieur.

Selon d'autres caractéristiques de l'invention :
- chaque protubérance est portée par une patte déformable élastiquement qui la relie à l'aile latérale qui la porte ;
- la patte déformable élastiquement s'étend longitudinalement d'arrière en avant, la protubérance est agencée à l'extrémité libre avant de la patte ;
- en section par un plan horizontal, chaque protubérance présente un profil en V ;
- la deuxième protubérance est décalée longitudinalement vers l'avant par rapport à la première protubérance ;
- la deuxième protubérance est agencée à l'extrémité libre avant de l'aile latérale qui la porte ;
- l'adaptateur comprend un premier tronçon convexe en arc de cylindre, formé de deux premières joues latérales internes transversalement opposées, qui est destiné à être reçu dans un fond concave du premier crochet d'extrémité d'un bras d'essuie-glace ;
- la première protubérance est agencée au centre d'une dite première joue latérale interne ;
- l'adaptateur comprend un deuxième tronçon convexe en arc de cylindre, formé de deux deuxièmes joues latérales internes transversalement opposées, qui est décalé longitudinalement vers l'avant par rapport audit premier tronçon et qui est destiné à être reçu dans un fond concave du deuxième crochet d'extrémité ;
- chaque deuxième joue latérale interne est portée par une aile latérale ;
- chaque première joue latérale interne est portée par une aile latérale associée et est décalée transversalement vers l'intérieur par rapport à ladite deuxième joue ;
- la face interne de chacune des deux ailes latérales est munie d'une nervure de rattrapage de jeu transversal dont chacune est destinée à coopérer avec une face latérale externe associée d'un crochet d'extrémité ;
- la face interne de chacune des deux ailes latérales est munie d'un plot de calage transversal dont chacun est destiné à coopérer avec une face latérale externe associée d'un crochet d'extrémité ;
- les première et deuxième protubérances sont portées par une même aile latérale ;
- l'adaptateur comporte au moins une branche qui s'étend longitudinalement vers l'arrière depuis le corps et qui porte un ergot de verrouillage en saillie destiné à être reçu dans une lumière de verrouillage d'un crochet d'extrémité du bras d'essuie-glace ;
- l'adaptateur comprend au moins un cran transversal de positionnement longitudinal, qui est destiné à coopérer avec une face transversale arrière du crochet d'extrémité ;
- le cran est porté par la branche qui porte l'ergot de verrouillage ;
- le corps comporte un élément élastique destiné à être monté comprimé élastiquement contre une portion en vis-à-vis du fond concave du crochet d'extrémité ;
- l'adaptateur est réalisé en une seule pièce moulée en matière plastique ;
- l'adaptateur présente une symétrie globale de conception selon un plan vertical médian ;
- l'adaptateur présente une symétrie globale de conception selon un plan horizontal médian.

L'invention propose aussi un ensemble comprenant un bras d'essuie-glace comportant une extrémité avant en forme de crochet en U et un adaptateur selon l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective éclatée qui représente un ensemble selon une conception de l'état de la technique constitué d'un bras d'essuie-glace, d'un adaptateur et d'un étrier principal d'articulation d'une lame d'essuyage ;
- la figure 2 est une vue latérale de détail à grande échelle de la portion d'extrémité avant en forme de crochet en U du bras d'essuie-glace illustré à la figure 1 ;
- la figure 3 est une vue en perspective à grande échelle d'un adaptateur du type de celui représenté à la figure 1 réalisé selon un exemple de réalisation de l'invention ;
- la figure 4A est une vue analogue à celle de la figure 3 sur laquelle l'adaptateur est représenté en position montée dans une portion d'extrémité en forme de crochet d'un bras d'essuie-glace de grande largeur transversale et possédant un brin inférieur long ;
- la figure 5A est une vue en coupe par un plan vertical et longitudinal médian de l'ensemble représenté à la figure 4A ;

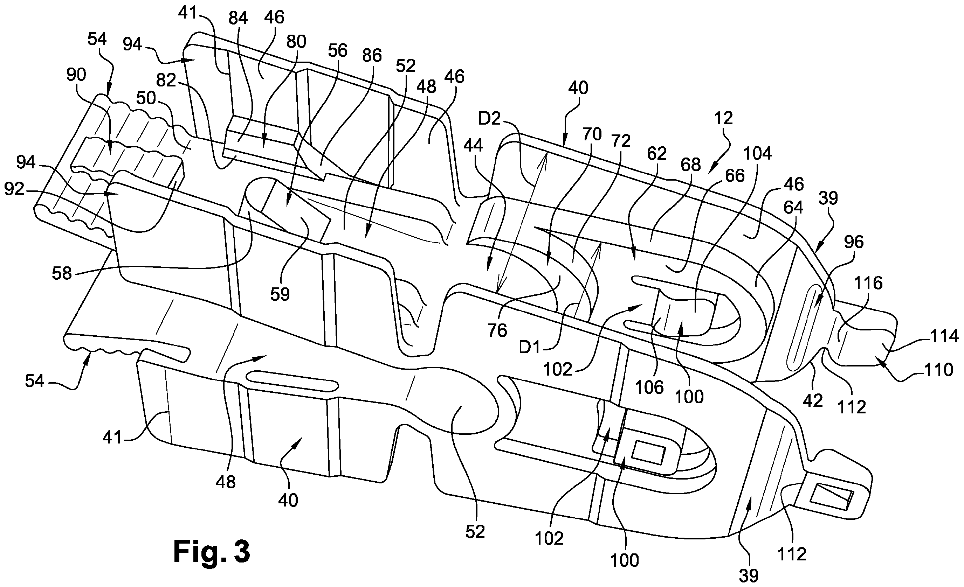

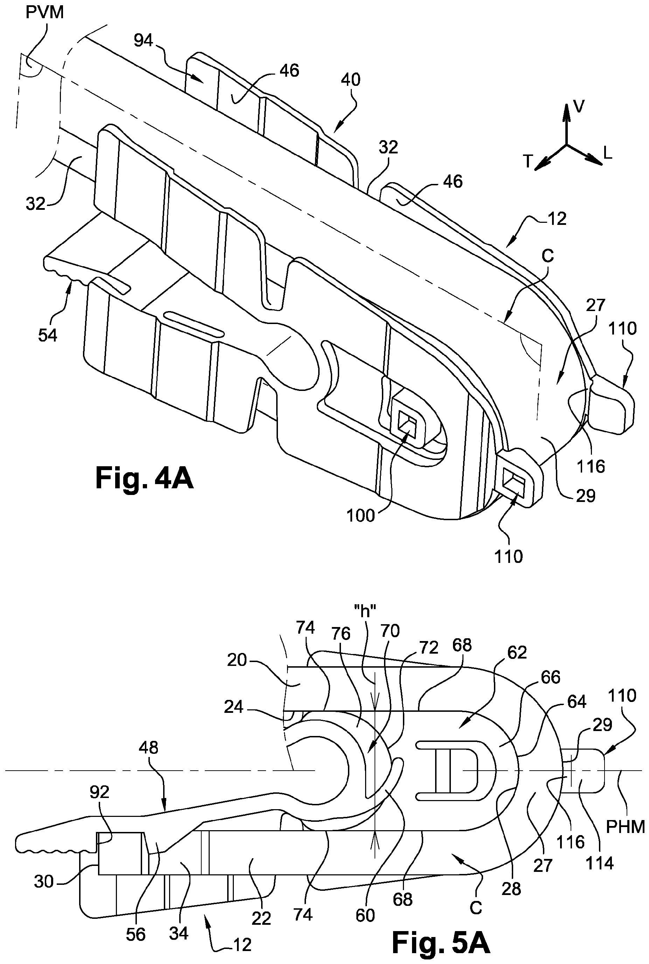

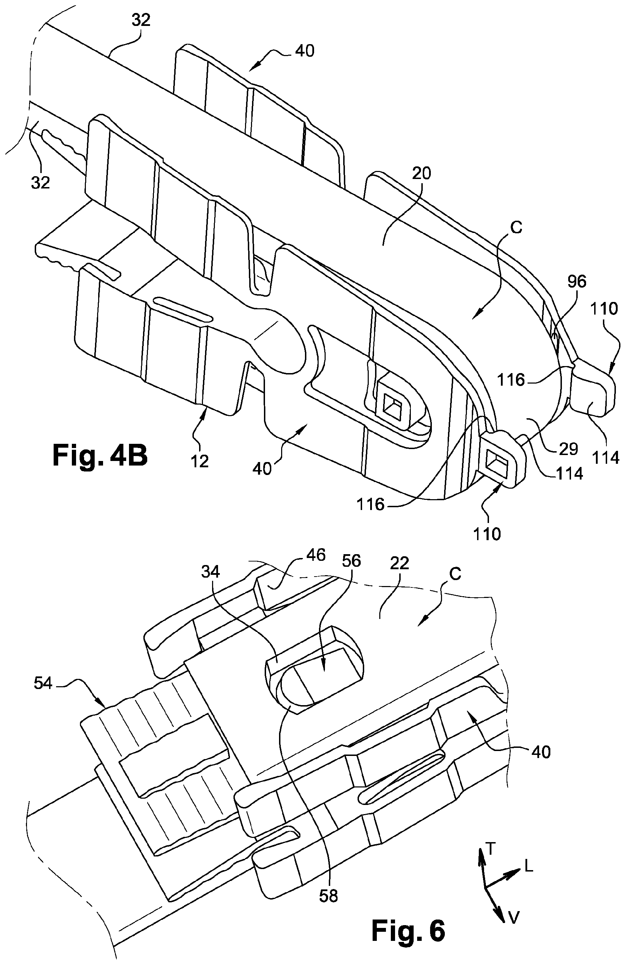

- la figure 4B est une vue analogue à celle de la figure 4A qui illustre l'adaptateur de la figure 3 en position montée dans une portion d'extrémité en forme de crochet d'un bras d'essuie-glace de petite largeur transversale et possédant un brin inférieur long ;
- la figure 6 est une vue en perspective de dessous qui représente un détail relatif à la coopération du brin inférieur avec l'adaptateur ;

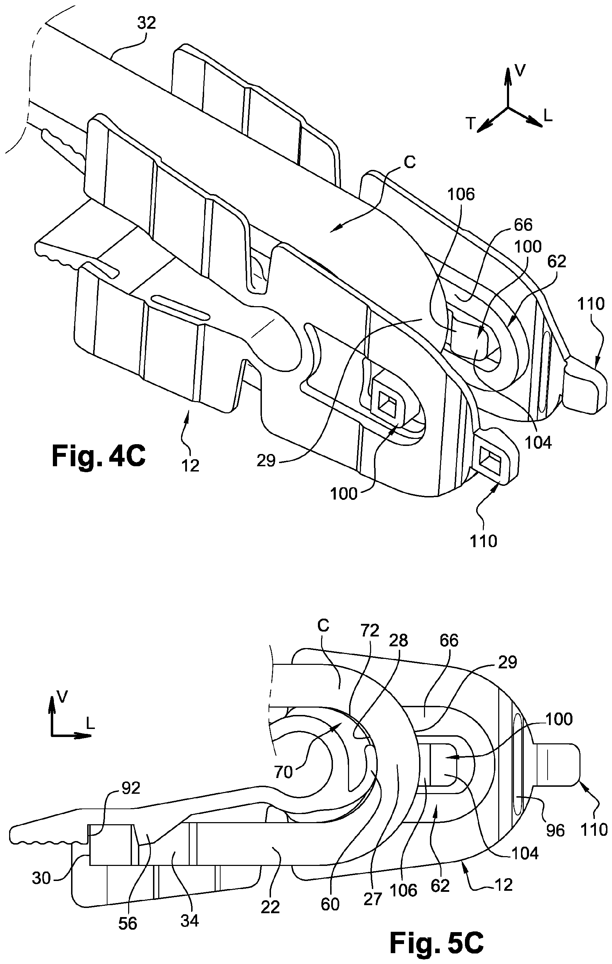

- les figures 4C et 5C sont des vues analogues à celles des figures 4A et 5A et qui illustrent l'adaptateur de la figure 3 en position montée dans une portion d'extrémité en forme de crochet d'un bras d'essuie-glace de petite largeur transversale et possédant un brin inférieur court ;

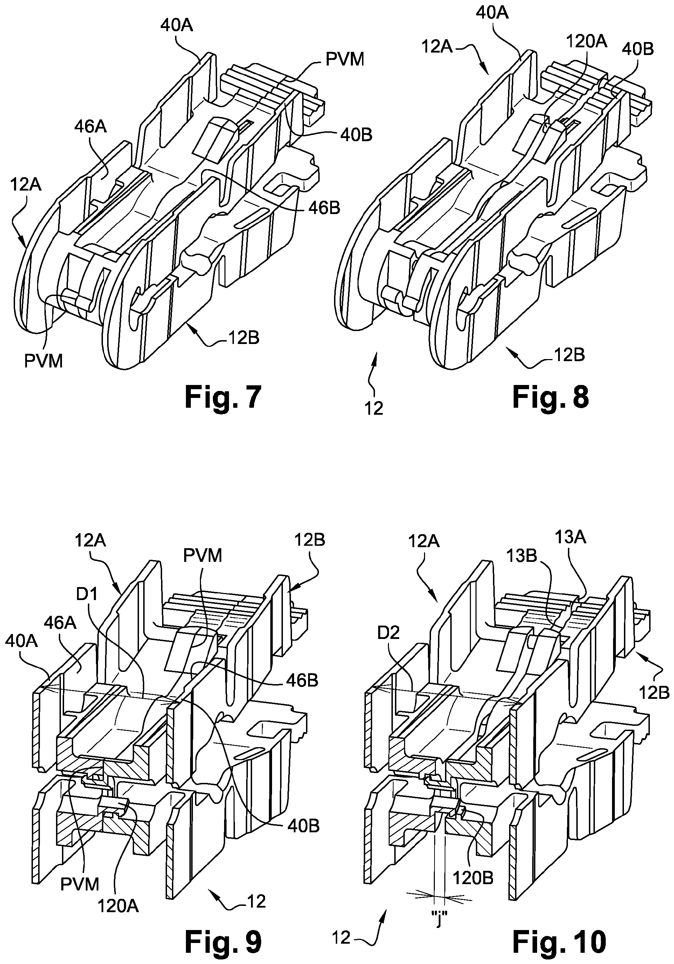

- la figure 7 est une vue en perspective d'un adaptateur réalisé en deux parties ou moitiés complémentaires permettant d'en faire varier les dimensions transversales en vue de s'adapter à des portions d'extrémité en forme de crochet de bras d'essuie-glace de la rgeurs transversales différentes, l'adaptateur étant illustré dans son état "étroit" ;
- la figure 8 est une vue analogue à celle de la figure 7 sur laquelle l'adaptateur est illustré dans son état "large" ;
- les figures 9 et 10 sont des vues analogues à celles des figures 7 et 8 sur lesquelles l'adaptateur est illustré avec un déplacement selon un plan vertical transversal ;

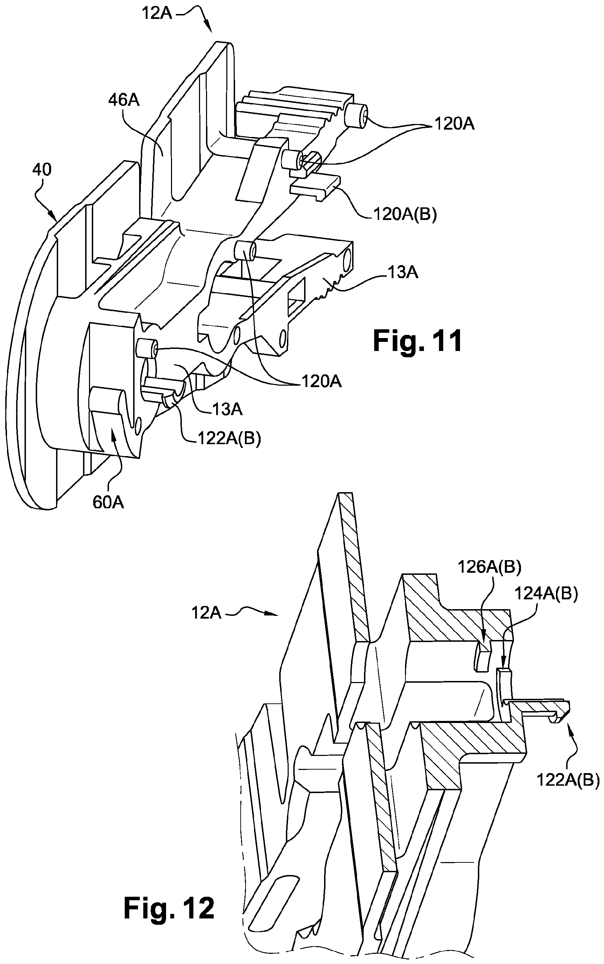

- les figures 11 et 12 sont des vues de détail à plus grande échelle des moyens de guidage relatif et de positionnement relatif des deux parties de l'adaptateur.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative et sans référence à la gravité terrestre, des orientations longitudinale, verticale et transversale indiquées par le trièdre "L,V,T" des figures. On définit aussi un plan horizontal qui s'étend longitudinalement et transversalement.

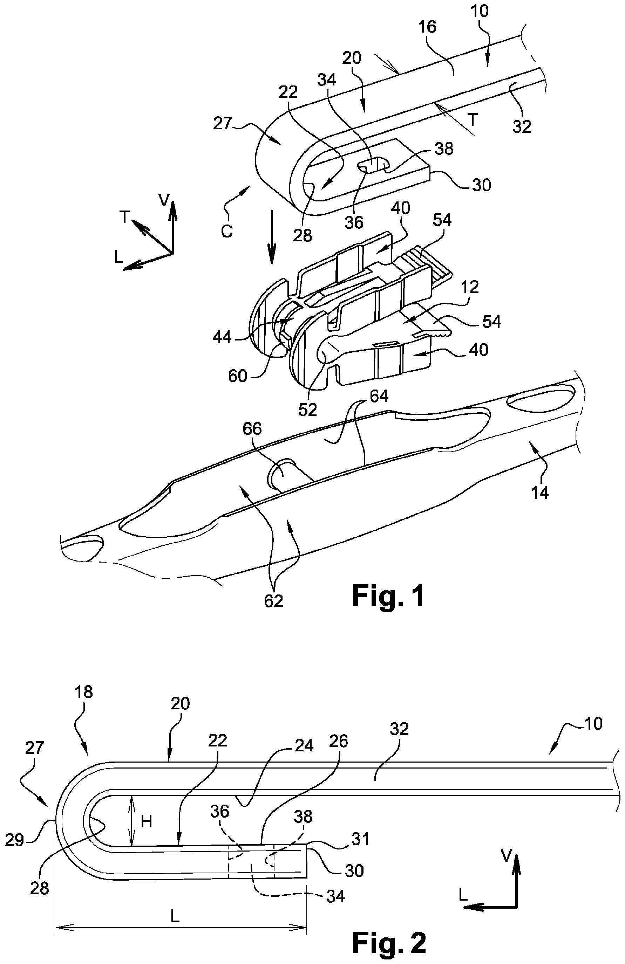

A la figure 1, on a représenté une portion d'un bras d'essuie-glace 10, aussi appelé bras d'entraînement, qui est associé à un adaptateur 12 pour le raccordement mécanique du bras d'essuie-glace 10, ici à un étrier principal 14 de support d'une lame d'essuyage (non représentée) d'un essuie-glace.

La partie longitudinale avant du bras d'essuie-glace 10 représentée notamment aux figures 1 et 2 prolonge le corps principal 16 du bras d'essuie-glace 10 et est conformée en un crochet C en forme de U.

La partie d'extrémité libre en forme de crochet C en U est constituée d'un brin supérieur horizontal 20, et d'un brin inférieur horizontal 22 dont chacun est délimité par une face horizontale plane 24, 26 respectivement.

Les deux brins horizontaux parallèles 20 et 22 sont reliés entre eux par un brin d'extrémité longitudinale avant 27 courbe conformé en un arc semi cylindrique qui délimite intérieurement un fond semi cylindrique concave 28 et qui est délimité extérieurement par une face avant convexe 29.

Le brin inférieur 22, dit brin « court », est délimité longitudinalement vers l'arrière par une face transversale et verticale d'extrémité arrière 30.

De manière connue, au voisinage de la face d'extrémité arrière 30, le brin inférieur 22 comporte une lumière de verrouillage 34 qui est ici un trou vertical débouchant qui est délimité longitudinalement par un bord d'extrémité avant 36 et par un bord d'extrémité arrière 38 dont chacun est conformé avec un profil arrondi concave.

De manière connue, le bras d'essuie-glace 10 et notamment sa portion d'extrémité avant C en forme de crochet en U, est réalisé sous la forme d'une barre métallique à section transversale rectangulaire (ici à angles arrondis) qui est coupée et pliée, et qui est délimitée transversalement par deux faces latérales verticales externes 32.

Parmi certaines des dimensions caractéristiques de la portion d'extrémité C, on a indiqué à la figure 1 la largeur transversale T séparant les deux faces latérales externes 32, et à la figure 2, la distance longitudinale "L" séparant le bord d'extrémité longitudinale avant de la face avant convexe 29 du brin recourbé 27 de la face transversale d'extrémité arrière 30 du brin 22. La longueur L est la longueur du brin inférieur court 22 qui peut varier d'un type à l'autre de crochet d'extrémité C.

On a aussi indiqué à la figure 2 la hauteur interne H séparant la face horizontales planes opposées 24, 26, cette hauteur H correspondant au diamètre du fond concave de profil semi-cylindrique circulaire 28 du brin recourbé 27, et l'épaisseur "E" de la barre métallique.

Comme on peut le voir notamment aux figures 1 et 3, l'adaptateur 12 est ici une pièce moulée en une seule pièce en matière plastique qui comporte deux ailes latérales verticales et longitudinales opposées 40 qui, au voisinage de leurs extrémités libres avant à profil arrondi convexe 42, sont reliées entre elles par un corps avant 44 de forme générale cylindrique convexe qui s'étend transversalement entre des portions en vis-à-vis des faces internes opposées 46 des ailes latérales 40.

Le corps avant 44 se prolonge longitudinalement vers l'arrière par deux branches longitudinales sensiblement horizontales 48 dont une branche supérieure et une branche inférieure formant un "V" couché.

Le corps transversal 44 est évidé intérieurement et délimite un logement interne cylindrique circulaire concave 52, d'axe géométrique transversal, qui est apte à recevoir à rotation une tige d'articulation de profil et de dimension complémentaires appartenant ici à l'étrier d'articulation 14.

L'adaptateur 12 se présente sous la forme d'une "pince" à deux branches 48 qui est déformable élastiquement, par rapport à son état de repos représenté notamment à la figure 3, pour rapprocher verticalement ou écarter l'une de l'autre les deux branches 48.

Au voisinage de son extrémité longitudinale arrière 50 chaque branche 48 comporte une languette 54 de préhension de manière, en agissant sur au moins une languette, à permettre la déformation de l'adaptateur 12 par rapprochement vertical des branches 48 comme mentionné précédemment.

Sur sa face externe 52, chaque branche 48 comporte un ergot de verrouillage 56 qui est formé en saillie et qui s'étend globalement verticalement vers l'extérieur.

Chaque ergot de verrouillage 56 est dimensionné de manière à pouvoir pénétrer, avec jeu, verticalement à l'intérieur d'une lumière de verrouillage 34 formée dans un brin en vis-à-vis, par exemple ici dans le brin inférieur 22.

L'ergot de verrouillage 56 est délimité longitudinalement vers l'arrière par une face transversale de butée 58 à profil arrondi convexe qui est orientée longitudinalement vers l'arrière et qui est apte à coopérer avec le bord d'extrémité arrière 38 de la lumière de verrouillage 34.

Sur sa surface externe convexe, le corps avant 44 comporte une lame élastique formant ressort 60 qui est apte à coopérer avec une portion en vis-à-vis du fond concave 28 du brin courbé 27 de la portion d'extrémité C en forme de crochet d'un bras d'essuie-glace 10.

Dans ce cas (voir figure 5C), en position montée de l'adaptateur 12 à l'intérieur de la portion d'extrémité en forme de crochet, la lame formant ressort 60 est montée comprimée longitudinalement de manière à exercer, longitudinalement vers l'arrière, un effort tendant à plaquer la face transversale arrière de butée 58 de l'ergot de verrouillage 56 contre le bord arrière 38 de la lumière de verrouillage 34.

L'étrier principal 14, représenté à titre d'exemple non limitatif à la figure 1, est ici une pièce en tôle découpée et pliée dont la partie centrale est constituée pour l'essentiel par deux joues verticales et longitudinales parallèles 62 dont chacune est délimitée par une face verticale interne 64 entre lesquelles s'étend transversalement une tige d'articulation 66 qui est apte à être reçue dans le logement 52 du corps avant 44 de l'adaptateur 12.

De manière connue, l'assemblage s'effectue ici en mettant d'abord en place l'adaptateur 12 sur la tige d'articulation 66 en emboîtant cette dernière longitudinalement d'arrière en avant jusque dans le logement 52, puis en venant mettre en place la portion d'extrémité en forme de crochet C en U du bras d'essuie-glace 10 dans laquelle l'adaptateur 12 est emboîté longitudinalement, d'arrière en avant, jusqu'à ce que l'ergot de verrouillage 56 porté par la branche 48 inférieure pénètre et s'emboîte dans la lumière de verrouillage 34.

Cette opération est facilitée par le profil avant en forme de rampe inclinée 59 de l'ergot de verrouillage 56 qui coopère avec un bord transversal horizontal supérieur arrière 31 en vis-à-vis du brin inférieur 22 pour provoquer une déformation élastique au moins de la branche 48 inférieure.

Lorsque l'on souhaite procéder au démontage, et donc au déverrouillage de la portion d'extrémité C en forme de crochet du bras d'essuie-glace 10 de l'adaptateur 12, l'opérateur doit agir sur la branche 48, ici inférieure, portant l'ergot 56 pour la déformer verticalement vers le haut et provoquer sa sortie hors de la lumière de verrouillage 34 et ceci ici en agissant sur la languette 54.

Selon l'exemple de réalisation illustré aux figures 3 et suivantes, l'adaptateur 12 présente une symétrie générale de conception, d'une part, par rapport au plan vertical médian PVM indiqué à la figure 4A et, d'autre part, par rapport au plan horizontal médian PHM indiqué à la figure 5A.

Seule la lame formant ressort 60 ne présente pas ici une symétrie de conception par rapport au plan horizontal médian PHM.

Comme on peut le voir plus particulièrement aux figures 3 à 6, l'adaptateur 12 comporte un premier tronçon longitudinal avant, à droite en considérant ces figures, qui est constitué essentiellement par deux premières joues latérales internes 62 dont chacune est adjacente à une portion associée de la face interne 46 d'une aile latérale associée 40 de l'adaptateur.

Chaque première joue latérale interne 62 est conformée à son extrémité avant en un arc semi-cylindrique convexe 64 et elle est délimitée transversalement vers l'intérieur par une face verticale interne 66.

Outre sa face convexe semi-cylindrique avant 64, chaque première joue latérale interne 62 est délimitée par deux faces longitudinales horizontales externes 68.

La hauteur "h" séparant les deux faces parallèles et horizontales 68 est dimensionnée de manière à permettre l'introduction de l'adaptateur 12 et notamment des premières joues latérales internes 62 entre les faces opposées 22 et 24 de l'extrémité en forme de crochet C séparées de la distance "H", et ceci quasiment sans jeu.

Les faces internes verticales 66 des deux premières joues latérales 62 transversalement opposées sont séparées l'une de l'autre d'une distance transversale D1.

La distance transversale D1, par exemple sensiblement égale à 9mm, est ainsi inférieure à la distance transversale D2 séparant les faces internes 46 opposées et en vis-à-vis des ailes latérales 40, qui est par exemple sensiblement égale à 12mm.

L'adaptateur 12 comporte un deuxième tronçon longitudinal, décalé longitudinalement vers l'arrière par rapport au premier tronçon longitudinal, qui est constitué essentiellement par deux deuxièmes joues latérales internes 70 dont chacune est adjacente à une face interne 66 d'une première joue latérale associée 62 de l'adaptateur 12.

Chaque deuxième joue latérale interne 70 est conformée à son extrémité avant en un arc semi-cylindrique convexe 72 et elle est délimitée transversalement vers l'intérieur par une face verticale interne 76.

Outre sa face convexe semi-cylindrique avant 72, chaque deuxième joue latérale interne 70 est délimitée par deux faces longitudinales horizontales externes 74 qui s'étendent respectivement dans le même plan que les faces longitudinales horizontales externes 68 des premières joues latérales internes 62.

Pour le calage latéral ou transversal de la portion d'extrémité en forme de crochet d'un bras d'essuie-glace "étroit" - ayant par exemple une largeur transversale "T" séparant ses faces latérales externes 32 sensiblement égale à 9mm - l'adaptateur 12 comporte quatre plots 80 de calage latéral, au voisinage de son extrémité longitudinale arrière.

Ainsi, l'adaptateur 12 comporte deux fois une paire de plots 80 transversalement opposés dont chacun comporte une face latérale verticale de calage 82, la distance transversale séparant deux faces 82 opposées étant sensiblement égale à la distance D1.

Chaque plot de calage 80 est adjacent à une portion associée d'une face interne 46 d'une aile latérale 40. Il comporte une facette latérale interne inclinée 84 et une facette transversale avant 86 elle-aussi inclinée.

Le plan dans lequel s'étendent les faces inclinées 86 correspond sensiblement au plan dans lequel s'étend la face formant rampe inclinée 59 de l'ergot de verrouillage 56.

L'adaptateur 12 comporte une butée arrière 90 qui, par sa face transversale et verticale avant 92, constitue un cran transversal de calage et de positionnement longitudinal destiné à coopérer avec une face transversale arrière 30 du brin inférieur 22 d'un crochet d'extrémité C, en fonction des dimensions de ce dernier.

Au-delà de son extrémité arrière 41, chaque aile latérale 40 comporte une patte arrière 94 à profil interne en V (en considérant deux pattes 94 opposées) de manière à former une pince de serrage élastique latérale apte à coopérer avec les faces latérales externes 32 d'un crochet d'extrémité de grande largeur transversale T.

De la même manière, pour effectuer un rattrapage latéral ou transversal de jeu lorsque le crochet d'extrémité est de largeur transversale T étroite, au voisinage de son extrémité avant, l'adaptateur 12 comporte deux nervures internes verticales et opposées 96.

Chaque nervure 96 est formée en saillie sur un tronçon d'extrémité avant 39 de l'aile latérale associée 40.

Chaque tronçon d'extrémité avant 39 forme un angle par rapport au plan vertical dans lequel s'étend l'aile latérale associée 40 et les deux tronçons d'extrémité avant opposés 39 forment ainsi une pince en "V" apte à se déformer légèrement de manière élastique pour obtenir un effet de rattrapage de jeu par serrage latéral ou transversal sur les faces latérales externes 32 d'un crochet d'extrémité.

Pour le verrouillage longitudinal en position montée d'un crochet d'extrémité, l'adaptateur 12 comporte ici deux paires de protubérances de verrouillage qui sont décalées longitudinalement de manière à assurer cette fonction selon le type de crochet d'extrémité C et notamment des dimensions longitudinales et transversales de ce dernier.

L'adaptateur 12 comporte ainsi une paire de premières protubérances 100 transversalement opposées dont chacune est agencée sensiblement au centre d'une première joue latérale 62.

Chaque protubérance 100 est reliée à la l'aile latérale associée 40 par une patte de liaison 102 qui la porte à son extrémité libre avant et qui est déformable élastiquement.

Ainsi, chaque première protubérance 100 est montée mobile par rapport à l'aile latérale associée 40 qui la porte par l'intermédiaire de la patte 102, entre une position de repos illustrée par exemple aux figures 3 et 4A dans laquelle elle fait saillie transversalement vers l'intérieur au-delà du plan de la face interne verticale 66 de la première joue latérale associée, et une position fléchie ou escamotée transversalement vers l'extérieur qu'elle est notamment susceptible d'occuper lors des opérations de montage d'un crochet d'extrémité sur un adaptateur 12.

Pour faciliter l'escamotage d'une première protubérance 100 lors du montage d'un crochet d'extrémité C correspondant, chaque première protubérance 100 comporte une facette verticale avant inclinée 104 formant rampe.

Pour assurer sa fonction de verrouillage longitudinal, chaque première protubérance 100 comporte une facette verticale arrière 106 inclinée qui est apte à coopérer avec une portion en vis-à-vis d'une face avant convexe 29 d'un crochet d'extrémité.

Ainsi, en section par un plan horizontal, chaque première protubérance 100 présente un profil en "V" à deux facettes 104 et 106.

De la même manière, l'adaptateur 12 comporte une paire de deuxièmes protubérances 110 transversalement opposées dont chacune est agencée à l'extrémité longitudinale avant libre du tronçon d'extrémité avant 39 d'une aile latérale associée 40.

Chaque deuxième protubérance 110 est reliée à la l'aile latérale associée 40 par une patte de liaison 112 qui la porte à son extrémité libre avant et qui est déformable élastiquement.

Ainsi, chaque première protubérance 110 est montée mobile par rapport à l'aile latérale associée 40 qui la porte par l'intermédiaire de la patte 112, entre une position de repos illustrée par exemple à la figure 3 dans laquelle elle fait saillie transversalement vers l'intérieur, et une position fléchie ou escamotée transversalement vers l'extérieur qu'elle est notamment susceptible d'occuper lors des opérations de montage d'un crochet d'extrémité sur un adaptateur 12.

Pour faciliter l'escamotage d'une deuxième protubérance 110 lors du montage d'un crochet d'extrémité C correspondant, chaque deuxième protubérance 110 comporte une facette verticale avant inclinée 114 formant rampe.

Pour assurer sa fonction de verrouillage longitudinal, chaque deuxième protubérance 110 comporte une facette verticale arrière 116 inclinée qui est apte à coopérer avec une portion en vis-à-vis d'une face avant convexe 29 d'un crochet d'extrémité.

Ainsi, en section par un plan horizontal, chaque deuxième protubérance 110 présente un profil en "V" à deux facettes 114 et 116.

Dans son état de repos non déformée élastiquement, chaque deuxième protubérance 110 fiat saillie transversalement vers l'intérieur de telle manière que sa facette verticale arrière 116 s'étende en regard d'une portion en vis-à-vis d'une face avant convexe 29 d'un crochet d'extrémité.

Chaque deuxième protubérance 110 est apte à être escamotée transversalement vers l'extérieur par fléchissement de sa patte de liaison 112 lors du montage d'un crochet d'extrémité de grande largeur transversale T.

Chaque protubérance de verrouillage longitudinal 100 ou 110 est apte à être escamotée par déformation élastique de sa patte de liaison 102 ou 112 respectivement sans induire de déformation de l'aile latérale associée 40.

A titre de variante non représentée, deux protubérances décalées longitudinalement 100 et 110 portées par une même aile latérale 40 pourraient être portées par une patte commune de liaison déformable élastiquement.

Aux figures 4A et 5A, on a représenté un ensemble constitué par un adaptateur 12 selon l'invention et un crochet d'extrémité C dit de grande largeur transversale T, par exemple égale à 12mm et dont le brin inférieur 22 est de grande longueur.

Avec de telles dimensions, ce sont les faces semi-cylindriques avant 64 des premières joues latérales internes 62 qui sont reçues en vis-à-vis de portions du fond concave 28 du crochet d'extrémité C, et ce sont les deuxièmes protubérances 110 qui constituent les protubérances de verrouillage longitudinal vers l'avant du crochet d'extrémité C.

Dans l'exemple représenté aux figures 4A et 5A, le brin inférieur 22 comporte une lumière de verrouillage 34 dans lequel est reçu un ergot de verrouillage 56.

La face transversale arrière 30 du brin inférieur 22 s'étend en regard du cran 92.

La branche supérieure 48, non représentée en détail à la figure 5A, est fléchie par déformation élastique de telle manière qu'elle est en butée contre une portion en vis-à-vis de la face interne 24 du brin supérieur 22 par l'intermédiaire des surfaces inclinées 59 (de l'ergot de verrouillage 56) et 86 (des plots de calage latéral 80), ces dernières formant rampe lors de l'opération de montage du crochet d'extrémité C sur l'adaptateur 12, pour provoquer cette déformation élastique.

Un rattrapage de jeu latéral ou transversal est assuré par les pattes arrière 94 qui coopèrent avec des portions en vis-à-vis des faces latérales externes opposées 32 du crochet d'extrémité C.

Le mode de coopération entre le crochet d'extrémité C et l'adaptateur 12 représenté aux figures 4A et 5A trouve aussi à s'appliquer lorsque le crochet d'extrémité C est du type "non poinçonné" c'est-à-dire lorsque son brin inférieur ne comporte pas de lumière 34, le positionnement et verrouillage longitudinal dans les deux sens du crochet d'extrémité C par rapport à l'adaptateur 12 étant alors assuré par la coopération des surfaces 64 et 116 avec les portions en vis-à-vis des surfaces 28 et 29 du brin d'extrémité avant 27 d'un crochet d'extrémité C de ce type.

Les figures 4B et 6 illustrent l'assemblage d'un adaptateur 12 avec un crochet d'extrémité C de largeur transversale réduite, par exemple égale à 9mm, mais dont le brin inférieur 22 est de grande longueur, c'est-à-dire de longueur analogue à celle du brin inférieur 22 du crochet d'extrémité C illustré notamment à la figure 5A.

Comme à la figure 5A, l'adaptateur 12 est verrouillé longitudinalement par l'intermédiaire de l'ergot de verrouillage 56 de la branche inférieure 48 qui est reçu dans la lumière 34 du brin inférieur 22 du crochet d'extrémité C.

Le guidage et le calage latéral ou transversal du crochet d'extrémité C par rapport à l'adaptateur 12 est assuré par les faces verticales 82 des plots de calage 80 équipant la branche inférieure 48 et partiellement par les faces inclinées 84 des plots de calage 80 agencés sur la branche supérieure 48.

Le calage latéral ou transversal avec effet de rattrapage de jeu est aussi assuré par les deux nervures verticales avant 96 et les faces inclinées 84 (des plots 80 de calage latéral), complétées par les surfaces 82 (des plots 80 de calage latéral).

Aux figures 4C et 5C, on a représenté un ensemble constitué par un adaptateur 12 selon l'invention et un crochet d'extrémité C de largeur transversale T étroite, par exemple égale à 9mm, et dont le brin inférieur 22 est de longueur L réduite, c'est-à-dire un brin inférieur dit "court".

Le tronçon avant du crochet d'extrémité C est reçu entre les faces verticales internes 66 des premières joues latérales internes 62 et son verrouillage longitudinal est notamment assuré par la coopération de l'ergot de verrouillage 56 reçu dans la lumière de verrouillage 34 du brin inférieur 22 du crochet d'extrémité C et par la coopération de la face transversale arrière 30 avec le cran 92, comme dans l'exemple illustré à la figure 5A.

Ce sont ici les faces avant convexes semi-cylindriques 72 des deuxièmes joues latérales internes 70 qui sont reçues dans le fond concave 28 du brin courbé avant 27 du crochet d'extrémité C.

La patte déformable élastiquement 60 fait ici fonction de rattrapage des jeux longitudinaux en coopérant avec une portion en vis-à-vis du fond concave interne 28 du crochet d'extrémité C.

Les premières protubérances 100 constituent des moyens supplémentaires de verrouillage longitudinal vers l'avant du crochet d'extrémité C par rapport à l'adaptateur 12.

Comme dans le cas illustré aux figures 4B et 6, les quatre plots 80 assurent une fonction de calage latéral ou transversal de l'adaptateur 12 par rapport aux faces verticales externes 32 du crochet d'extrémité C.

Ici encore, le brin inférieur 22 peut être dépourvu de lumière de verrouillage 34, le positionnement et le verrouillage longitudinal étant alors assuré par les surfaces 72 et 106.

On a représenté aux figures 7 à 10 le principe de conception d'un adaptateur 12 réalisé en deux parties ou deux moitiés 12A et 12B globalement symétriques par rapport au plan vertical médian que constitue, le plan de joint PVM des deux moitiés 12A et 12B (Figures 7 et 9,).

Lorsque les deux moitiés 12A et 12B sont assemblées de manière jointive selon le plan de joint PVM, les faces verticales 46A et 46B des ailes latérales 40A et 40B sont séparées d'une distance transversale D1 réduite tandis que, dans l'autre position illustrée aux figures 8 et 10, elles sont espacées d'une distance transversale D2 supérieure à la distance transversale D1.

Dans cette deuxième position fonctionnelle illustrée aux figures 8 et 10, il existe un jeu transversal « j » entre les faces verticales internes opposées 13A et 13B des deux moitiés 12A et 12B qui correspond sensiblement à la différence D2 moins D1.

Ainsi, les deux moitiés 12A et 12B sont montées mobiles transversalement l'une par rapport à l'autre selon la direction transversale entre :
- une première configuration fonctionnelle « étroite » représentée aux figures 7 et 9 pour son utilisation avec un crochet d'extrémité C "étroit" dont la largeur transversale est par exemple égale à 9mm ;
- et une deuxième configuration fonctionnelle « large » pour que l'adaptateur 12 soit utilisé avec un crochet d'extrémité C de plus grande largeur transversale T, par exemple égale à 12mm.

Pour le guidage du déplacement relatif des deux moitiés 12A et 12B selon la direction transversale pour passer d'une configuration étroite à une configuration large, il est par exemple prévu des plots de guidage 120A qui sont reçus dans des alésages complémentaires formés en vis-à-vis dans la face 13B de l'autre moitié 12B.

Afin d'assurer le verrouillage de la position transversale relative des moitiés 12A et 12B, il est aussi prévu des éléments de verrouillage 122A et 122B complémentaires dans l'une et l'autre des deux moitiés 12A et 12B.

Comme on peut le voir à la figure 12, il est prévu deux nervures 124A(B) et 126A(B) correspondant aux deux configurations illustrées.

Ainsi, indépendamment de la conception de moyens de verrouillage longitudinal d'un crochet d'extrémité par rapport à l'adaptateur, il est proposé une conception réglable par incrémentation de la largeur transversale de l'adaptateur en deux parties permettant son utilisation avec des crochets d'extrémités de deux largeurs transversales T

L'invention trouve à s'appliquer pour tout type de balai d'essuie-glace et notamment pour des balais dits de type plat (aussi appelés "balai flat blade"), ou dits de type "hybride".

## Revendications

1. Adaptateur (12) pour le raccordement d'un balai d'essuie-glace à une extrémité (C) en forme de crochet en U d'un bras d'essuie-glace, adaptateur comprenant :
- deux ailes latérales verticales (40) entre lesquelles est reçu le crochet d'extrémité (C) du bras d'essuie-glace ;
- un corps (44) de profil externe avant convexe qui s'étend transversalement entre les faces internes des deux ailes ;
- au moins une première protubérance (100) qui est portée par une aile latérale (40) et qui fait saillie transversalement vers l'intérieur pour coopérer avec une face d'extrémité avant convexe (29) d'un premier crochet d'extrémité d'une première dimension,
- au moins une deuxième protubérance (110) qui est portée par une aile latérale (40), qui est décalée longitudinalement vers l'avant par rapport à la première protubérance (100) et qui fait saillie transversalement vers l'intérieur pour coopérer avec une face d'extrémité avant convexe (29) d'un deuxième crochet d'extrémité d'une deuxième dimension, chaque protubérance (100, 110) étant montée mobile par rapport à l'aile latérale (40) qui la porte entre :
-- une position de repos dans laquelle elle fait saillie transversalement vers l'intérieur ;
-- et une position escamotée transversalement vers l'extérieur, **caractérisé en ce que** ledit adaptateur comporte au moins une branche (48) qui s'étend longitudinalement vers l'arrière depuis le corps (44) et qui porte un ergot de verrouillage (56) en saillie destiné à être reçu dans une lumière de verrouillage (34) d'un crochet d'extrémité (C) du bras d'essuie-glace (10).

2. Adaptateur selon la revendication 1, **caractérisé en ce que** chaque protubérance (100, 110) est portée par une patte (102, 112) déformable élastiquement qui la relie à l'aile latérale (40) qui la porte.

3. Adaptateur selon la revendication 2, **caractérisé en ce que** la patte (102, 112) déformable élastiquement s'étend longitudinalement d'arrière en avant, et **en ce que** la protubérance (100, 110) est agencée à l'extrémité libre avant de la patte (102, 112).

4. Adaptateur selon l'une quelconque des revendications précédentes, **caractérisé en ce que**, en section par un plan horizontal, chaque protubérance (100, 110) présente un profil en V.

5. Adaptateur selon l'une quelconque des revendications précédentes, **caractérisé en ce qu'**il comprend un premier tronçon convexe en arc de cylindre, formé de deux premières joues (62) latérales internes transversalement opposées, qui est destiné à être reçu dans un fond concave (28) du deuxième crochet d'extrémité (C1) d'un bras d'essuie-glace.

6. Adaptateur selon la revendication 5, **caractérisé en ce que** ladite première protubérance (100) est agencée au centre d'une dite première joue (62) latérale interne (62).

7. Adaptateur selon la revendications 5, **caractérisé en ce qu'**il comprend un deuxième tronçon convexe en arc de cylindre, formé de deux deuxièmes joues (70) latérales internes transversalement opposées, qui est décalé longitudinalement vers l'avant par rapport audit premier tronçon et qui est destiné à être reçu dans un fond concave (28) dudit premier crochet d'extrémité (C2).

8. Adaptateur selon la revendication 7, **caractérisé en ce que** chaque dite deuxième joue latérale interne (70) est portée par une aile latérale associée (40).

9. Adaptateur selon la revendication 8, **caractérisé en ce que** chaque dite première joue latérale interne (62) est portée par une aile latérale associée (40) et est décalée transversalement vers l'intérieur par rapport à ladite deuxième joue (70).

10. Adaptateur selon l'une quelconque des revendications 7 à 9, **caractérisé en ce que** la face interne (46) de chacune des deux ailes latérales (40) est munie d'une nervure (96) de rattrapage de jeu transversal dont chacune est destinée à coopérer avec une face latérale externe associée (32) d'un crochet d'extrémité.

11. Adaptateur selon la revendication 1, **caractérisé en ce que** la face interne de chacune des deux ailes latérales (40) est munie d'un plot (80) de calage transversal dont chacun est destiné à coopérer avec une face latérale externe associée (32) d'un crochet d'extrémité (C1).

12. Adaptateur selon l'une quelconque des revendications précédentes, **caractérisé en ce qu'**il comprend au moins un cran (92) transversal de positionnement longitudinal, qui est destiné à coopérer avec une face transversale arrière (30) d'un crochet d'extrémité.

13. Adaptateur selon la revendication 12, **caractérisé en ce que** ledit cran (92) est porté par ladite branche (48) qui porte l'ergot de verrouillage (56).

14. Adaptateur selon la revendication 1, **caractérisé en ce que** le corps (44) comporte un élément élastique (60) destiné à être monté comprimé élastiquement contre une portion en vis-à-vis du fond concave (28) du crochet d'extrémité (C).

15. Ensemble comprenant un bras d'essuie-glace (10) comportant une extrémité (C) en forme de crochet en U et un adaptateur (12) selon l'une quelconque des revendications précédentes.

## Patentansprüche

1. Adapter (12) zum Anschluss eines Scheibenwischerblattes an ein in Form eines U-Hakens ausgebildetes Ende (C) eines Scheibenwischerarmes, wobei der Adapter umfasst:
- zwei vertikale seitliche Schenkel (40), zwischen denen der Endhaken (C) des Scheibenwischerarmes aufgenommen wird;
- einen Körper (44) mit konvexem vorderem Außenprofil, welcher sich quer zwischen den Innenseiten der zwei Schenkel erstreckt;
- wenigstens einen ersten Vorsprung (100), welcher von einem seitlichen Schenkel (40) getragen wird und welcher quer nach innen vorsteht, um mit einer konvexen vorderen Endfläche (29) eines ersten Endhakens mit einer ersten Abmessung zusammenzuwirken,
- wenigstens einen zweiten Vorsprung (110), welcher von einem seitlichen Schenkel (40) getragen wird, welcher in Bezug auf den ersten Vorsprung (100) in Längsrichtung nach vorn versetzt ist und welcher quer nach innen vorsteht, um mit einer konvexen vorderen Endfläche (29) eines zweiten Endhakens mit einer zweiten Abmessung zusammenzuwirken, wobei jeder Vorsprung (100, 110) in Bezug auf den seitlichen Schenkel (40), der ihn trägt, beweglich angebracht ist zwischen:
-- einer Ruheposition, in welcher er quer nach innen vorsteht;
-- und einer quer nach außen versenkten Position, **dadurch gekennzeichnet, dass** der Adapter wenigstens einen Zweig (48) aufweist, welcher sich vom Körper (44) aus in Längsrichtung nach hinten erstreckt und welcher einen vorstehenden Verriegelungsnocken (56) trägt, der dazu bestimmt ist, in einer Verriegelungsöffnung (34) eines Endhakens (C) des Scheibenwischerarmes (10) aufgenommen zu werden.

2. Adapter nach Anspruch 1, **dadurch gekennzeichnet, dass** jeder Vorsprung (100, 110) von einer elastisch verformbaren Lasche (102, 112) getragen wird, welche ihn mit dem seitlichen Schenkel (40), der ihn trägt, verbindet.

3. Adapter nach Anspruch 2, **dadurch gekennzeichnet, dass** sich die elastisch verformbare Lasche (102, 112) in Längsrichtung von hinten nach vorn erstreckt, und dadurch, dass der Vorsprung (100, 110) am vorderen freien Ende der Lasche (102, 112) angeordnet ist.

4. Adapter nach einem der vorhergehenden Ansprüche, **dadurch gekennzeichnet, dass** im Schnitt entlang einer horizontalen Ebene jeder Vorsprung (100, 110) ein V-Profil aufweist.

5. Adapter nach einem der vorhergehenden Ansprüche, **dadurch gekennzeichnet, dass** er ein erstes zylinderbogenförmiges konvexes Teilstück umfasst, das von zwei ersten inneren Seitenwangen (62), die einander in Querrichtung gegenüberliegen, gebildet wird, und das dazu bestimmt ist, in einem konkaven Boden (28) des zweiten Endhakens (C1) eines Scheibenwischerarmes aufgenommen zu werden.

6. Adapter nach Anspruch 5, **dadurch gekennzeichnet, dass** der erste Vorsprung (100) in der Mitte einer solchen ersten inneren Seitenwange (62) angeordnet ist.

7. Adapter nach Anspruch 5, **dadurch gekennzeichnet, dass** er ein zweites zylinderbogenförmiges konvexes Teilstück umfasst, das von zwei zweiten inneren Seitenwangen (70), die einander in Querrichtung gegenüberliegen, gebildet wird, das in Bezug auf das erste Teilstück in Längsrichtung nach vorn versetzt ist und das dazu bestimmt ist, in einem konkaven Boden (28) des ersten Endhakens (C2) aufgenommen zu werden.

8. Adapter nach Anspruch 7, **dadurch gekennzeichnet, dass** jede solche zweite innere Seitenwange (70) von einem zugeordneten seitlichen Schenkel (40) getragen wird.

9. Adapter nach Anspruch 8, **dadurch gekennzeichnet, dass** jede erste innere Seitenwange (62) von einem zugeordneten seitlichen Schenkel (40) getragen wird und in Bezug auf die zweite Wange (70) in Querrichtung nach innen versetzt ist.

10. Adapter nach einem der Ansprüche 7 bis 9, **dadurch gekennzeichnet, dass** die Innenseite (46) jedes der zwei seitlichen Schenkel (40) mit einer Rippe (96) zum Ausgleich des Querspiels versehen ist, die jeweils dazu bestimmt ist, mit einer zugeordneten äußeren seitlichen Fläche (32) eines Endhakens zusammenzuwirken.

11. Adapter nach Anspruch 1, **dadurch gekennzeichnet, dass** die Innenseite jedes der zwei seitlichen Schenkel (40) mit einem Block (80) zur Positionierung in Querrichtung versehen ist, der jeweils dazu bestimmt ist, mit einer zugeordneten äußeren seitlichen Fläche (32) eines Endhakens (C1) zusammenzuwirken.

12. Adapter nach einem der vorhergehenden Ansprüche, **dadurch gekennzeichnet, dass** er wenigstens eine Querkerbe (92) zur Positionierung in Längsrichtung umfasst, die dazu bestimmt ist, mit einer hinteren Querseite (30) eines Endhakens zusammenzuwirken.

13. Adapter nach Anspruch 12, **dadurch gekennzeichnet, dass** die Kerbe (92) von dem Zweig (48) getragen wird, welcher den Verriegelungsnocken (56) trägt.

14. Adapter nach Anspruch 1, **dadurch gekennzeichnet, dass** der Körper (44) ein elastisches Element (60) aufweist, das dazu bestimmt ist, so angebracht zu werden, dass es an einem Abschnitt gegenüber dem konkaven Boden (28) des Endhakens (C) elastisch zusammengedrückt wird.

15. Anordnung, welche einen Scheibenwischerarm (10), der ein Ende (C) in der Form eines U-Hakens aufweist, und einen Adapter (12) nach einem der vorhergehenden Ansprüche umfasst.

## Claims

1. Adapter (12) for connecting a windscreen wiper to a U-hook-shaped end (C) of a wiper arm, the adapter comprising:
- two vertical lateral flanges (40) between which the end hook (C) of the wiper arm is received;
- a body (44) with a convex front external profile which extends transversely between the internal faces of the two flanges;
- at least one first protuberance (100) which is borne by a lateral flange (40) and projects transversely towards the inside to collaborate with a convex front end face (29) of a first hook of a first size,
- at least a second protuberance (110) which is borne by a lateral flange (40), which is offset longitudinally towards the front with respect to the first protuberance (100) and which projects transversely towards the inside to collaborate with a convex front end face (29) of a second end hook of a second size,
each protuberance (100, 110) being mounted with the ability to move with respect to the lateral flange (40) that bears it between:
-- a rest position in which it projects transversely towards the inside;
-- and a position in which it is retracted transversely towards the outside, **characterized in that** the said adapter comprises at least one branch (48) which extends longitudinally towards the rear from the body (44) and which bears a projecting locking lug (56) intended to be received in a locking slot (34) of an end hook (C) of the wiper arm (10).

2. Adapter according to Claim 1, **characterized in that** each protuberance (100, 110) is borne by an elastically deformable tab (102, 112) which connects it to the lateral flange (40) that bears it.

3. Adapter according to Claim 2, **characterized in that** the elastically deformable tab (102, 112) extends longitudinally from the rear forwards, and **in that** the protuberance (100, 110) is arranged at the front free end of the tab (102, 112).

4. Adapter according to any one of the preceding claims, **characterized in that**, in cross section on a horizontal plane, each protuberance (100, 110) has a V-shaped profile.

5. Adapter according to any one of the preceding claims, **characterized in that** it comprises a first convex portion in the form of an arc of a cylinder, formed of two first transversely opposed internal lateral cheeks (62), and which is intended to be received in a concave bottom (28) of the second end hook (C1) of a wiper arm.

6. Adapter according to Claim 5, **characterized in that** the said first protuberance (100) is arranged at the centre of one of said first internal lateral (62) cheek (62).

7. Adapter according to Claim 5, **characterized in that** it comprises a second convex portion in the form of an arc of a cylinder, formed of two second transversely opposed internal lateral cheeks (70), and which is offset longitudinally towards the front with respect to the said first portion and is intended to be received in a concave bottom (28) of the said first end hook (C2).

8. Adapter according to Claim 7, **characterized in that** each said second internal lateral cheek (70) is borne by an associated lateral flange (40).

9. Adapter according to Claim 8, **characterized in that** each said first internal lateral cheek (62) is borne by an associated lateral flange (40) and is offset transversely towards the inside with respect to the said second cheek (70).

10. Adapter according to any one of Claims 7 to 9, **characterized in that** the internal face (46) of each of the two lateral flanges (40) is provided with a transverse clearance compensating rib (96) each of which is intended to collaborate with an associated external lateral face (32) of an end hook.

11. Adapter according to Claim 1, **characterized in that** the internal face of each of the two lateral flanges (40) is equipped with a transverse wedging block (80) each of which is intended to collaborate with an associated external lateral face (32) of an end hook (C1).

12. Adapter according to any one of the preceding claims, **characterized in that** it comprises at least one longitudinal-positioning transverse notch (92) which is intended to collaborate with a rear transverse face (30) of an end hook.

13. Adapter according to Claim 12, **characterized in that** the said notch (92) is borne by the said branch (48) which bears the locking stud (56).

14. Adapter according to Claim 1, **characterized in that** the body (44) comprises an elastic element (60) intended to be mounted elastically compressed against a facing portion of the concave bottom (28) of the end hook (C).

15. Assembly comprising a wiper arm (10) comprising a U-hook-shaped end (C) and an adapter (12) according to any one of the preceding claims.
